# EUROPEAN PATENT APPLICATION

(11) **EP 2 767 732 A1**
(43) Date of publication of application: **20.08.2014**
(21) Application number: 11873801.2
(22) Date of filing: 14.10.2011
(51) Int. Cl.: F16H 57/027

(54) **POWER TRANSMISSION DEVICE**

(71) Applicant: TOYOTA JIDOSHA KABUSHIKI KAISHA, Toyota-shi, Aichi-ken, 471-8571 (JP)
(72) Inventor: HASEGAWA, Ryuichi, Toyota-shi Aichi 471-8571 (JP); TOMITA, Makoto, Toyota-shi Aichi 471-8571 (JP); YAMAMOTO, Yoshihiro, Toyota-shi Aichi 471-8571 (JP); KAWASAKI, Kanji, Osaka-shi Osaka 542-8502 (JP)
(74) Representative: TBK
(86) International application number: PCT/JP2011/005772
(87) International publication number: WO 2013/054385

(57) **Abstract**

Provided is a power transmission device that is able to prevent, by use of existing components, breather blow from occurring via an air hole and to prevent an increase of a manufacturing cost.

A power transmission device (11) is configured such that a terminal block (81) is attached to an upper portion of a housing (21) so as to be opposed to an air hole (59), and the terminal block (81) is disposed between the air hole (59) and a breather hole (60). In an upper portion of the housing (21) of a transaxle case (12), the terminal block (81) includes: terminals (87U, 87V) that connect a bus cable connector of a bus cable to terminals (86U, 86V) of wirings (85U, 85V) of a stator (44) of a motor generator (17) accommodated in a motor chamber (71); and a housing (82) that holds the terminals (87U, 87V).

## Description

### TECHNICAL FIELD

The present invention relates to a power transmission device, and particularly, relates to a power transmission device in which a motor chamber that accommodates a motor therein communicates, via an air hole, with a gear chamber that accommodates a gear therein, and a breather that communicates the motor chamber with its outside is provided.

### BACKGROUND ART

A power transmission device provided in a hybrid vehicle is configured such that a motor and a gear such as a speed change gear or a differential gear are accommodated in a transaxle case, so that powers of an internal combustion engine and the motor are transmitted to wheel assemblies via the speed change gear or the differential gear.

In view of this, oil is required to lubricate the speed change gear, the differential gear, or the like, and a frictional sliding portion such as a bearing that pivotally supports the speed change gear, the differential gear, or the like, and to cool off the motor.

The oil is accumulated on a bottom face of the transaxle case, and brought up to an upper portion of a transaxle by rotations of the motor and the gear. The oil thus brought up to the upper portion of the transaxle falls in the transaxle case so as to cool off the motor and to lubricate the gear and the bearing.

In the meantime, when the motor or the gear rotates at a high speed or when a temperature in the transaxle case becomes high, a pressure in the transaxle case increases. In view of this, it is necessary to balance the pressure in the transaxle case with an outside pressure. On this account, a breather that restrains a pressure change in the transaxle case is provided in an upper portion of the transaxle case.

For example, there has been conventionally known a power transmission device described in Patent Document 1 as a power transmission device in which a breather is provided in a transaxle case.

The power transmission device is configured such that the transaxle case is sectioned by a partition portion into a motor chamber where a motor is accommodated and a gear chamber where a gear such as a differential gear and a speed change gear is accommodated, and an air hole is formed in the partition portion that communicates the motor chamber with the gear chamber.

The air hole is formed in an upper portion of the partition portion so as to prevent air circulation from being disturbed by oil circulating through the transaxle case.

Further, a breather is provided above the gear chamber in an upper portion of the transaxle case, and the breather communicates the gear chamber with an outside of the transaxle case.

Hereby, when pressures of the motor chamber and the gear chamber increase, the gear chamber communicates with the outside of the transaxle case via the breather and the motor chamber communicates with the gear chamber via the air hole, thereby making it possible to balance the pressures of the motor chamber and the gear chamber with an outside pressure.

### Citation List

### Patent Document

Patent Document 1: Japanese Patent Application Publication No. 2010-190299 (JP 2010-190299 A)

### SUMMARY OF THE INVENTION

### Problem to be Solved by the Invention

However, in such a conventional power transmission device, the air hole is formed in the upper portion of the partition portion, and thus, the air hole is provided at a position close to the breather. Accordingly, in a case where the pressure in the transaxle case increases, after oil in the gear chamber is discharged to the motor chamber via the air hole, the oil reaches right under the breather and leaks outside from the breather, that is, so-called breather blow may occur.

In order to prevent such a deficiency, it is conceivable, for example, that a cover plate or the like is provided right under the breather, so that the oil discharged from the air hole hits the cover plate or the like, thereby preventing the breather blow.

However, in a case where such a cover plate or the like for preventing the breather blow is provided, the number of components in the power transmission device increases and a manufacturing cost of the power transmission device increases.

The present invention is accomplished in order to solve the above conventional problem, and an object of the present invention is to provide a power transmission device that is able to prevent, by use of existing components, breather blow from occurring via an air hole and to prevent an increase of a manufacturing cost.

### Means for Solving the Problem

In order to achieve the above object, a power transmission device according to the present invention includes: a case; a partition portion that sections an inside of the case into a motor chamber in which a motor having a stator is accommodated and a gear chamber in which a gear connected to the motor is accommodated, the partition portion having an air hole that communicates the motor chamber with the gear chamber; a breather provided in an upper portion of the case so as to communicate the motor chamber with an outside of the case; and a terminal block attached to the upper portion of the case, and the power transmission device is configured such that: the terminal block is attached to the case so as to be placed between the air hole and the breather.

In the power transmission device, the terminal block is attached to the case so as to be placed between the air hole and the breather. In view of this, when a pressure in the case increases so that an inside of the case communicates with an outside of the case via the breather, it is possible to cause oil discharged from the gear chamber to the motor chamber via the air hole to hit the terminal block. This makes it possible to prevent the oil from reaching the breather, and to prevent occurrence of breather blow.

Further, in the power transmission device including the motor, an upper portion of the case is provided with the terminal block that connects the motor accommodated in the motor chamber or an electrical component to an external wiring.

In the present invention, since it is possible to prevent breather blow by using the existing terminal block in the power transmission device, it is possible to prevent an increase of the number of components in the power transmission device and to prevent an increase of a manufacturing cost of the power transmission device.

The terminal block of the power transmission device may be preferably configured to include a terminal portion connected to the stator terminal and to a terminal of an external wiring, and a hold member that holds the terminal portion and is attached to the case.

In the power transmission device, since the terminal block to which the stator terminal of the motor is connected is provided between the air hole and the breather, it is possible to prevent breather blow by causing oil discharged from the air hole to the motor chamber, to hit the existing terminal block in the power transmission device.

The terminal block of the power transmission device may be preferably configured to include a terminal portion connected to a terminal of a wiring of an electrical component accommodated in the motor chamber and to a terminal of an external wiring, and a hold member that holds the terminal portion and is attached to the case.

In the power transmission device, the terminal block to which a terminal of a wiring of an electrical component accommodated in the motor chamber, e.g., a resolver that detects a rotation angle of a rotor of the motor, or a thermistor that detects a temperature of the motor, is provided between the air hole and the breather. Accordingly, it is possible to prevent breather blow by causing oil discharged from the air hole to the motor chamber, to hit the existing terminal block in the power transmission device.

The terminal block of the power transmission device may be preferably configured to be placed between the air hole and the breather so as to be opposed to the air hole.

In the power transmission device, the terminal block is placed between the air hole and the breather so as to be opposed to the air hole. Accordingly, when a pressure in the case increases, it is possible to cause oil just discharged to the motor chamber via the air hole to hit the terminal block. This makes it possible to more surely prevent the oil from reaching the breather, and to more surely prevent occurrence of breather blow.

In the power transmission device, that wiring of the stator which is connected to the terminal portion of the terminal block may be preferably configured to be placed between the air hole and the breather so as to be opposed to the air hole.

In the power transmission device, that wiring of the stator which is connected to the terminal portion of the terminal block is placed between the air hole and the breather so as to be opposed to the air hole. Accordingly, it is possible to cause oil just discharged to the motor chamber via the air hole to hit the wiring of the stator.

This makes it possible to more surely prevent the oil from reaching the breather, and to more surely prevent occurrence of breather blow.

In the power transmission device, that wiring of an electrical component which is connected to the terminal portion of the terminal block may be preferably configured to be placed between the air hole and the breather so as to be opposed to the air hole.

In the power transmission device, that wiring of the electrical component which is connected to the terminal portion of the terminal block is placed between the air hole and the breather so as to be opposed to the air hole. Accordingly, it is possible to cause oil just discharged to the motor chamber via the air hole to hit the wiring of the electrical component. This makes it possible to more surely prevent the oil from reaching the breather, and to more surely prevent occurrence of breather blow.

### Advantageous Effects of Invention

According to the present invention, it is possible to provide a power transmission device that is able to prevent, by use of existing components, breather blow from occurring via an air hole and to prevent an increase of a manufacturing cost.

### BRIEF DESCRIPTION OF THE DRAWINGS

[FIG. 1] FIG. 1 is a view illustrating one embodiment of a power transmission device according to the present invention, and is a schematic configuration diagram of the power transmission device.
[FIG. 2] FIG. 2 is a view illustrating one embodiment of the power transmission device according to the present invention, and is a view illustrating a surface of a housing of a transaxle case on a gear-chamber side.
[FIG. 3] FIG. 3 is a view illustrating one embodiment of the power transmission device according to the present invention, and is a view illustrating a surface of the housing of the transaxle case on a motor-chamber side.
[FIG 4] FIG. 4 is a view illustrating one embodiment of the power transmission device according to the present invention, and is a view illustrating a state where a motor generator and a terminal block are attached to the housing in a state of FIG. 2.
[FIG. 5] FIG. 5 is a view illustrating one embodiment of the power transmission device according to the present invention, and is a top view of the housing of the transaxle case.
[FIG. 6] FIG. 6 is a view illustrating one embodiment of the power transmission device according to the present invention, and is a perspective view of the terminal block and an external wiring attached to the housing of the transaxle case.
[FIG. 7] FIG. 7 is a view illustrating one embodiment of the power transmission device according to the present invention, and is an exploded perspective view of the terminal block and the external wiring.
[FIG. 8] FIG. 8 is a view illustrating one embodiment of the power transmission device according to the present invention, and is a top view of the terminal block and the external wiring.
[FIG. 9] FIG. 9 is a view illustrating one embodiment of the power transmission device according to the present invention, and is a front view of the terminal block.
[FIG. 10] FIG. 10 is a view illustrating one embodiment of the power transmission device according to the present invention, and is a side view of the terminal block.
[FIG. 11] FIG. 11 is a view illustrating one embodiment of the power transmission device according to the present invention, and is a view illustrating a state where oil is discharged from an air hole to a motor chamber.
[FIG. 12] FIG. 12 is a view illustrating one embodiment of the power transmission device according to the present invention, and is a view illustrating a housing having another configuration for preventing breather blow.
[FIG. 13] FIG. 13 is a view illustrating one embodiment of the power transmission device according to the present invention, and is a view illustrating a housing having another configuration for preventing breather blow.
[FIG. 14] FIG. 14 is a view illustrating one embodiment of the power transmission device according to the present invention, and is a view illustrating a housing having another configuration for preventing breather blow.

### MODES FOR CARRYING OUT THE INVENTION

An embodiment of a power transmission device according to the present invention will be described below with reference to the drawings.

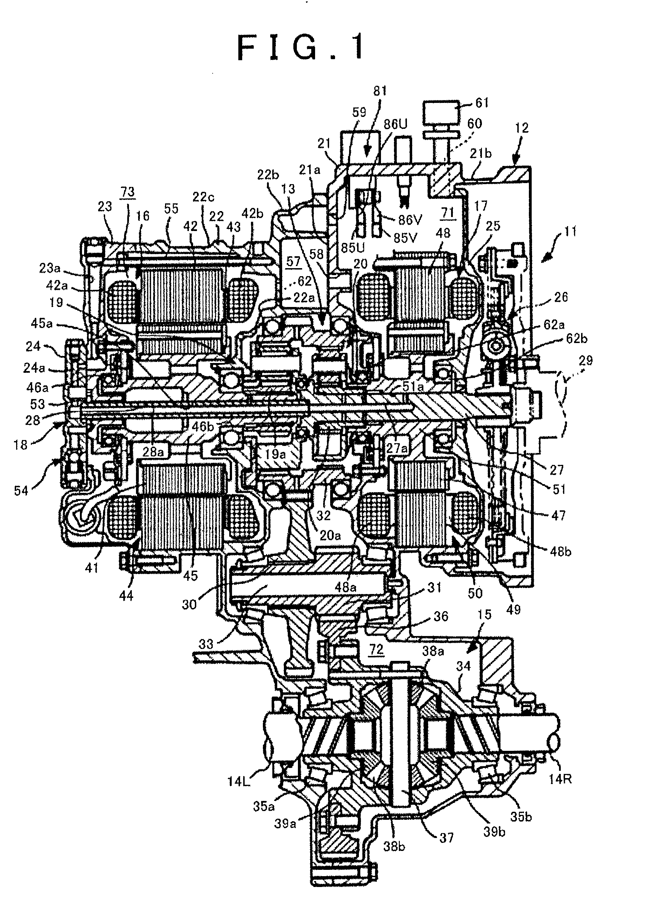

FIGS. 1 to 14 are views illustrating one embodiment of the power transmission device according to the present invention.

First of all, a configuration thereof is described.

In FIG. 1, a power transmission device 11 provided in a hybrid vehicle includes a transaxle case 12, and in the transaxle case 12, a compound planetary gear apparatus 13 constituting a gear shifting mechanism, a differential apparatus 15 that is able to provide differential outputs to front drive shafts 14L, 14R, a driving motor 16 that drives a vehicle by accumulated electric power, a motor generator 17 as a motor that is able to generate electric power by power from an engine (not shown), and an oil pump 18 that supplies oil to each part of the power transmission device 11 are accommodated.

The compound planetary gear apparatus 13 is configured to include a first planetary gear 19 that transmits a power output from the driving motor 16, and a second planetary gear 20 that transmits a power output from the engine, so as to be able to selectively transmit the powers output form the driving motor 16 and the engine to the differential apparatus 15.

The transaxle case 12 includes a housing 21 fastened and supported on an engine side, and a case 22 fixed to an open end of the housing 21 on a side opposite to the engine side.

Further, a case cover 23 is attached to an open end of the case 22 on a side opposite to a housing-21 side, and an oil-pump cover 24 is attached to that side of the case cover 23 which is opposite to a case-22 side.

Further, a housing cover 25 is attached to the housing 21 such that the housing cover 25 defines, in the housing 21, an accommodation portion for the motor generator 17 and an accommodation portion for a damper element 26 serving as a driving force transmission mechanism.

Thus, the transaxle case 12 is constituted by the housing 21, the case 22, the case cover 23, and the housing cover 25, and the transaxle case 12 constitutes a case.

In rotation center portions of the motor generator 17 and the second planetary gear 20, an input shaft 27 extending so as to penetrate through the motor generator 17 and the second planetary gear 20 is disposed.

Further, in rotation center portions of the driving motor 16 and the first planetary gear 19, an oil-pump drive shaft 28 extending so as to penetrate through the driving motor 16 and the first planetary gear 19 is disposed.

One end portion of the input shaft 27 is engaged integrally with a crank shaft 29 in a rotation direction, and the other end portion thereof is connected to the second planetary gear 20, so as to transmit a power from the engine to the compound planetary gear apparatus 13.

One end portion of the oil-pump drive shaft 28 is engaged integrally with the input shaft 27 in a rotation direction, and the other end portion thereof is connected to the oil pump 18, so as to transmit a power from the input shaft 27 to the oil pump 18.

Further, in the transaxle case 12, a counter driven gear 30 and a final drive gear 31 that transmit a power output from the compound planetary gear apparatus 13 to the differential apparatus 15 are provided.

The counter driven gear 30 meshes with the after-mentioned counter drive gear 32 of the compound planetary gear apparatus 13, and the counter drive gear 32 is splined to a counter shaft 33 with which the final drive gear 31 is integrally formed.

The differential apparatus 15 includes a hollow differential case 34, and the differential case 34 is rotatably supported by the case 22 and the housing 21 via bearings 35a, 35b.

A final gear 36 that meshes with the final drive gear 31 is fastened to an outer peripheral portion of the differential case 34, so that a power output from the compound planetary gear apparatus 13 is transmitted to the differential case 34 via the final gear 36.

Further, inside the differential case 34, a pinion gear shaft 37 is supported, and a pair of differential pinion gears 38a, 38b are supported rotatably by the pinion gear shaft 37.

Side gears 39a, 39b respectively mesh with the differential pinion gears 38a, 38b, the front drive shafts 14L, 14R are respectively connected to the side gears 39a, 39b, and front wheels (not shown) are respectively fixed to the front drive shafts 14L, 14R.

Note that deceleration by such a plurality of gears 38a, 38b, 39a, 39b and a function of the differential apparatus 15 are well known, so that they are not described here in detail.

The driving motor 16 is configured to include: a rotor 41 to which a permanent magnet is attached; and a stator 44 having a three-phase coil 42 of a U-phase, a V-phase, and a W-phase as a stator coil, and a stator core 43 around which the three-phase coil 42 is wound. The driving motor 16 is configured as a permanent magnet synchronous motor.

Further, the rotor 41 is provided integrally with a rotor shaft 45, and the rotor shaft 45 has a through hole 45a formed in a rotation-axis direction.

The rotor shaft 45 is supported by the case 22 and the case cover 23 via bearings 46a, 46b in a state where the oil-pump drive shaft 28 is inserted into the through hole 45a.

Further, an end portion of the rotor shaft 45 on its engine side is splined to a sun gear 19a of the first planetary gear 19, so that the rotor shaft 45 rotates integrally with the sun gear 19a of the first planetary gear 19.

The motor generator 17 is configured to include: a rotor 47 to which a permanent magnet is attached; and a stator 50 having a three-phase coil 48 of a U-phase, a V-phase, and a W-phase, and a stator core 49 around which the three-phase coil 48 is wound. The motor generator 17 is configured as a permanent magnet synchronous motor.

Further, the rotor 47 is provided integrally with a rotor shaft 51, and the rotor shaft 51 has a through hole 51a formed in a rotation-axis direction. The rotor shaft 51 is supported by the housing 21 and the housing cover 25 via bearings 62a, 62b in a state where the input shaft 27 is inserted into the through hole 51a.

Further, an end portion of the rotor 47 on a side opposite to its engine side is splined to a sun gear 20a of the second planetary gear 20, so that the rotor 47 rotates integrally with the sun gear 20a of the second planetary gear 20.

The rotors 41, 47 of the driving motor 16 and the motor generator 17 are disposed across a slight gap with respect to inner circumferences of the stators 44, 50, respectively, so as to generate magnetic fields by rotations of the rotors 41, 47.

The oil pump 18 is constituted by a drive rotor 53 attached to the oil-pump drive shaft 28, and a driven rotor (not shown), and is rotatably supported by the case cover 23.

Further, a pressure relief valve 54 is accommodated in the oil-pump cover 24, and an oil-pressure control is performed. Oil that is pumped up by the oil pump 18 is supplied to each part constituting the power transmission device 11 via a plurality of oil passages formed in the oil-pump drive shaft 28 and the input shaft 27 while the oil is limited to a predetermined setting pressure by the pressure relief valve 54.

Further, oil passages 24a, 23a are formed respectively in the oil-pump cover 24 and in the case cover 23, so that the oil pumped up by the oil pump 18 is supplied to one end portion of the oil passage 24a. The oil thus supplied to the one end portion of the oil passage 24a is supplied to one end portion of the oil passage 23a from the other end portion of the oil passage 24a.

Further, an oil pipe 55 is connected to the other end portion of the oil passage 23a, and the oil thus supplied to the one end portion of the oil passage 23a is supplied to the oil pipe 55 from the other end portion of the oil passage 23a.

The oil pipe 55 is placed above the driving motor 16 so as to extend along an axis direction of the driving motor 16, so that the oil discharged from the oil pump 18 is discharged to those coil ends 42a, 42b of the three-phase coil 42 which project outwardly from respective ends of the stator core 43 in the axis direction and which have a highest temperature.

That is, the oil pipe 55 discharges the oil to the coil ends 42a, 42b of the three-phase coil 42 so as to cool off the coil ends 42a, 42b and to lubricate the bearing 46a, 46b by the oil that falls along the coil ends 42a, 42b.

Further, oil passages 27a, 28a are formed respectively in the input shaft 27 and in the oil-pump drive shaft 28, and the oil discharged from the oil pump 18 is supplied to the compound planetary gear apparatus 13 and the bearings 62a, 62b via the oil passages 27a, 28a.

In the meantime, the housing 21 includes a partition portion 21a, so that in the transaxle case 12, a motor chamber 71 is defined by the partition portion 21a, an annular portion 21b of the housing 21, and the housing cover 25, while a gear chamber 72 is defined by the partition portion 21a, a partition portion 22a of the case 22, and an annular portion 22b of the case 22.

That is, the partition portion 21a of the housing 21 defines the motor chamber 71 and the gear chamber 72 in the transaxle case 12.

The motor generator 17 is accommodated in the motor chamber 71, and the compound planetary gear apparatus 13 connected to the motor generator 17, the counter driven gear 30, the final drive gear 31, and the differential apparatus 15 are accommodated in the gear chamber 72.

Note that, in the present embodiment, the compound planetary gear apparatus 13, the counter driven gear 30, the final drive gear 31, the counter drive gear 32, and the differential apparatus 15 constitute a gear.

Further, in the transaxle case 12, a motor chamber 73 is defined by the partition portion 22a of the case 22, an annular portion 22c of the case 22, and the case cover 23, and the driving motor 16 is accommodated in the motor chamber 73.

Further, oil is accommodated on a bottom face of the gear chamber 72, and the oil is brought up above the gear chamber 72 by the final gear 36.

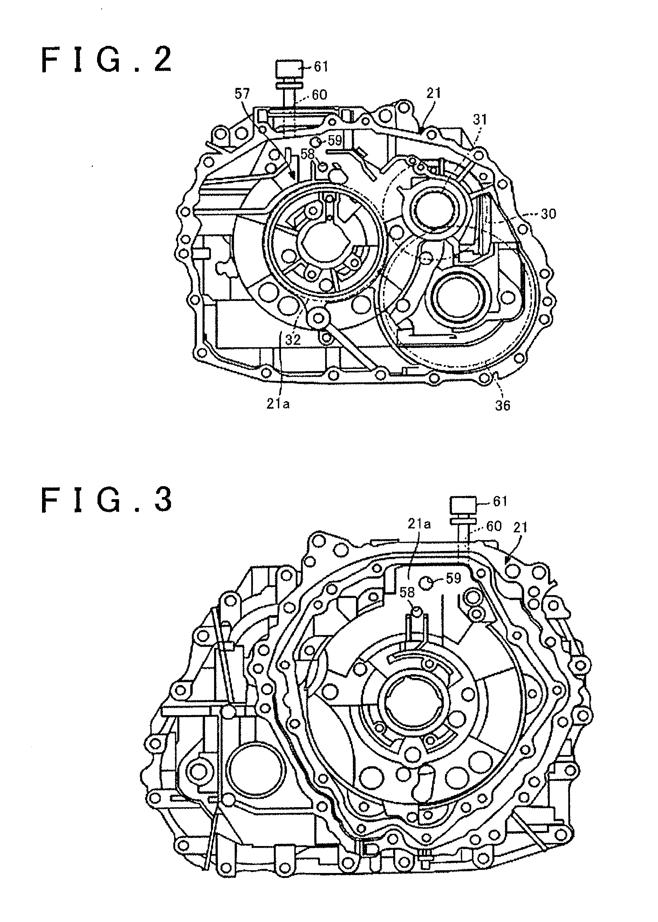

As illustrated in FIG. 2, a catch tank 57 is formed in an upper portion of the partition portion 21a that faces the gear chamber 72, and the catch tank 57 constitutes an oil pool that temporarily accumulates oil therein, together with that partition portion 22a of the case 22 which is opposed to the partition portion 21a.

The oil thus accumulated in the catch tank 57 is dropped to the compound planetary gear apparatus 13, so as to lubricate the compound planetary gear apparatus 13. Further, a communicating hole 58 is formed in the partition portion 21a of the housing 21, and the communicating hole 58 communicates the motor chamber 71 with the gear chamber 72.

In view of this, the oil brought up to the catch tank 57 is supplied via the communicating hole 58 to those coil ends 48a, 48b of the three-phase coil 48 which project outwardly from respective ends of the stator core 49 of the motor generator 17 in the axis direction and which have a highest temperature, so that the coil ends 48a, 48b are cooled off by the oil.

In the meantime, as illustrated in FIGS. 1 to 3, an air hole 59 is formed in an upper portion of the partition portion 21a of the housing 21, and the air hole 59 communicates the motor chamber 71 with the gear chamber 72. Further, a breather hole 60 is formed in an upper portion of the housing 21 above the motor chamber 71, and the breather hole 60 is placed in vicinity to the air hole 59.

Further, a breather plug 61 is attached to the upper portion of the housing 21. The breather plug 61 projects upward from the upper portion of the housing 21 so as to communicate with the breather hole 60.

The breather plug 61 includes, for example, a valve element provided on a communication path that communicates the motor chamber 71 with an outside of the transaxle case 12 via the breather hole 60, and a spring that biases the valve element in a valve-closing direction so as to close the communication path.

When a pressure of the motor chamber 71 increases, the valve element moves in a direction where the communication path is released against a biasing force of the spring, so that the breather plug 61 communicates the motor chamber 71 with the outside of the transaxle case 12 via the breather hole 60. In the present embodiment, the breather hole 60 and the breather plug 61 constitute a breather.

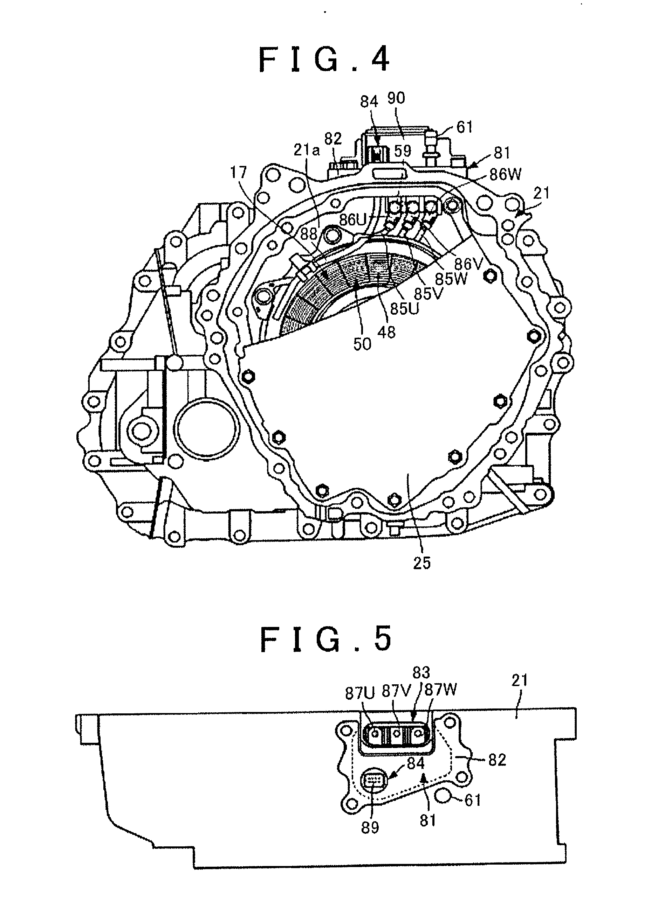

Further, as illustrated in FIGS. 4 to 10, a terminal block 81 is provided in the upper portion of the housing 21. Note that FIGS. 2, 3 illustrate a state where the terminal block 81 is not attached. In the terminal block 81, an electric-power connector 83 and a signal connector 84 are provided integrally with a resin housing 82. Note that the housing 82 constitutes a hold member.

The electric-power connector 83 includes terminals 87U, 87V, 87W to which terminals 86U, 86V, 86W of wirings 85U, 85V, 85W that are respectively connected to the three-phase coil 48 of the motor generator 17 are connected. Note that the terminals 86U, 86V, 86W constitute a stator terminal, and the terminals 87U, 87V, 87W constitute a terminal portion.

Further, the electric-power connector 83 is covered with a shield shell 90, so that the electric-power connector 83 is protected by the shield shell 90. Note that FIGS. 5, 8, 9, 10 illustrate a state where the shield shell 90 is not attached.

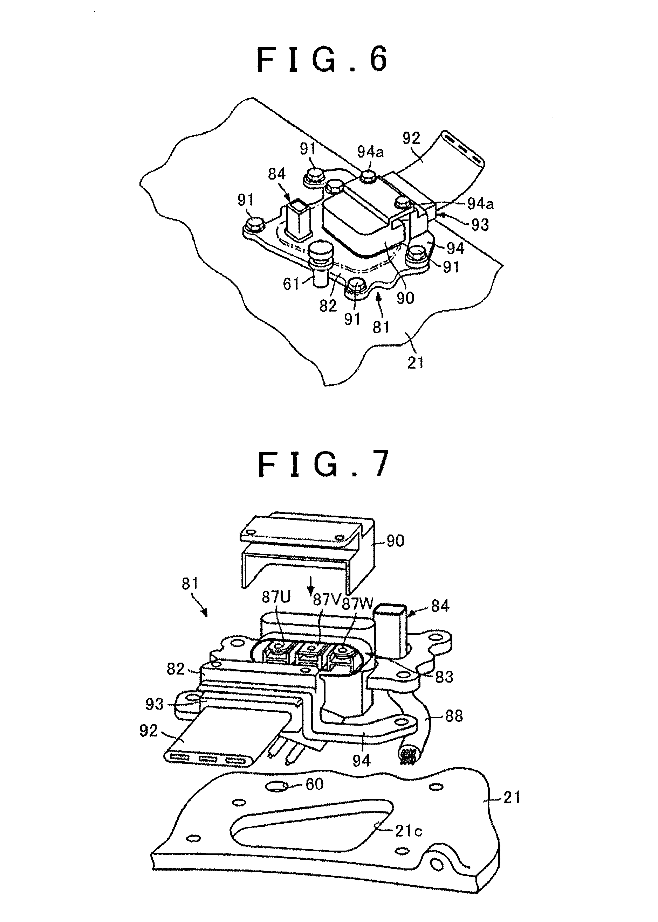

Further, the housing 82 is accommodated in the housing 82 via a through hole 21c (see FIG. 7) formed in the upper portion of the housing 21, and as illustrated in FIG. 6, the housing 82 is fixed to the upper portion of the housing 21 with bolts 91.

Further, as illustrated in FIGS. 6 to 8, a bus cable 92 as an external wiring is connected to the electric-power connector 83 of the terminal block 81 via a bus cable connector 93, and the bus cable connector 93 is fixed to the upper portion of the housing 21 by a cable stay 94 and a cable-stay screw thread 94a.

Thus, the bus cable 92 is relayed to the wirings 85U, 85V, 85W via the terminal block 81, thereby making it possible to take electric power out of the motor generator 17 into the bus cable 92 via the wirings 85U, 85V, 85W, and to supply electric power from the bus cable 92 to the motor generator 17 via the wirings 85U, 85V, 85W.

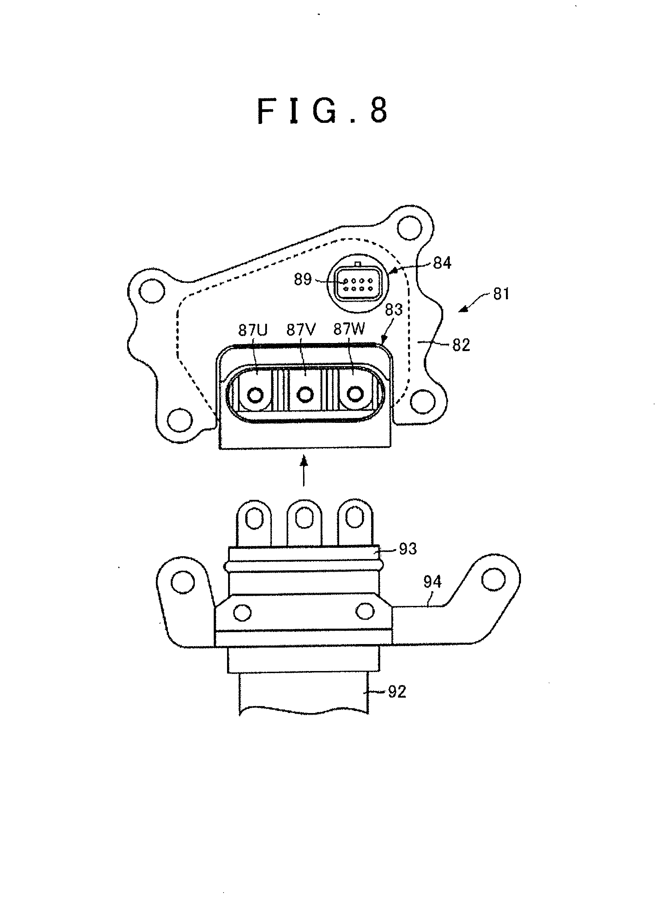

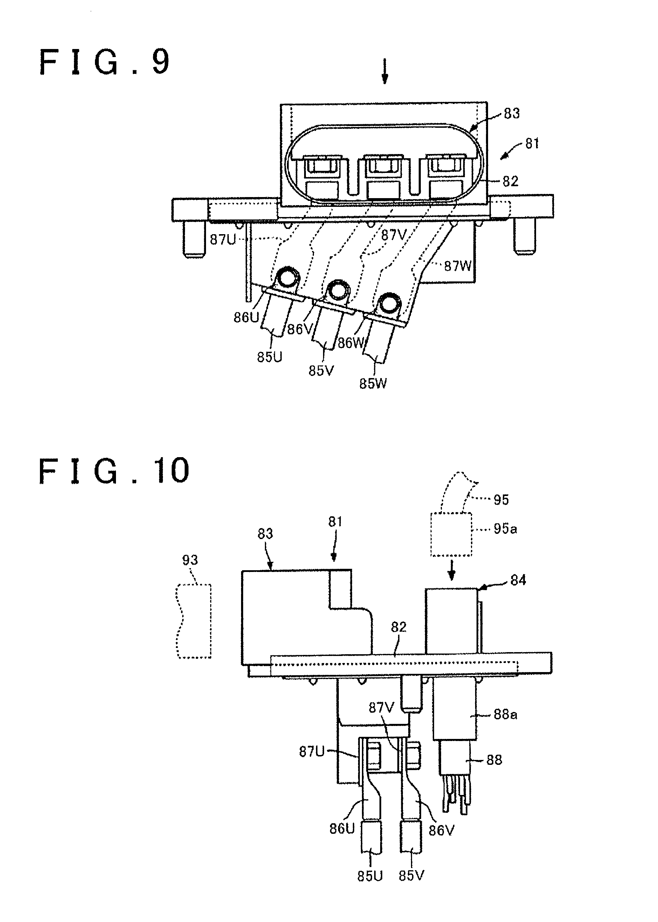

Further, as illustrated in FIGS. 5, 8, the signal connector 84 of the terminal block 81 is provided with a terminal 89 as a terminal portion, and a terminal 88a (see FIG. 10) of a wiring 88 of a resolver (an electrical component, not shown herein) that detects a rotation angle of the rotor 41 of the motor generator 17 is connected to the terminal 89.

Further, as illustrated in FIG. 10, a terminal 95a of an external wiring 95 is to be connected to the terminal 89, so that a signal from the resolver is output to the external wiring 95 from the wiring 88 via the signal connector 84.

In the meantime, as illustrated in FIG. 1, the terminal block 81 is attached to the housing 21 so as to be placed between the air hole 59 and the breather hole 60.

More specifically, the terminal block 81 is configure such that a part of the housing 82 is accommodated in the housing 21 of the transaxle case 12 via the through hole 21c, so that the housing 82 is opposed to the air hole 59 (FIG. 1, see FIG. 4). That is, the terminal block 81 is attached to the upper portion of the housing 21 so as to be opposed to the air hole 59.

Further, an air hole 62 is formed in the partition portion 22a of the case 22, and the air hole 62 communicates the motor chamber 73 with the gear chamber 72. Note that the driving motor 16 is also provided with a terminal block having the same configuration as the terminal block 81, but this terminal block is not illustrated herein.

Next will be describes operations.

When the driving motor 16, the motor generator 17, the compound planetary gear apparatus 13, the final gear 36, and the like rotate at a high speed in high-speed running of the vehicle, or when a temperature in the transaxle case 12 becomes high, a pressure in the transaxle case 12 increases.

When the pressure in the transaxle case 12 increases to a predetermined pressure, the breather plug 61 is released to the atmosphere, so that the motor chamber 71 communicates with outside air via the breather plug 61 and the breather hole 60.

Further, the motor chamber 71, the gear chamber 72, and the motor chamber 73 communicate with each other via the air hole 59 of the partition portion 21a and the air hole 62 of the partition portion 22a, so that pressures in the motor chamber 71, the gear chamber 72, and the motor chamber 73 are balanced with a pressure outside the transaxle case 12.

In order to prevent air circulation from being disturbed by the oil circulating through the transaxle case 12, the air hole 59 is formed in the upper portion of the partition portion 21a and is provided in vicinity to the breather hole 60.

In view of this, when the motor chamber 71 communicates with the outside air via the breather plug 61 and the breather hole 60, the pressure in the motor chamber 71 is changed from a high pressure to a low pressure. As a result, after the oil in the gear chamber 72 is discharged to the motor chamber 71 via the air hole 59, the oil may reach right under the breather hole 60 and leak outside, that is, so-called breather blow may occur.

In the power transmission device 11 of the present embodiment, the terminal block 81 is attached to the upper portion of the housing 21 so as to be opposed to the air hole 59, and the terminal block 81 is provided between the air hole 59 and the breather hole 60.

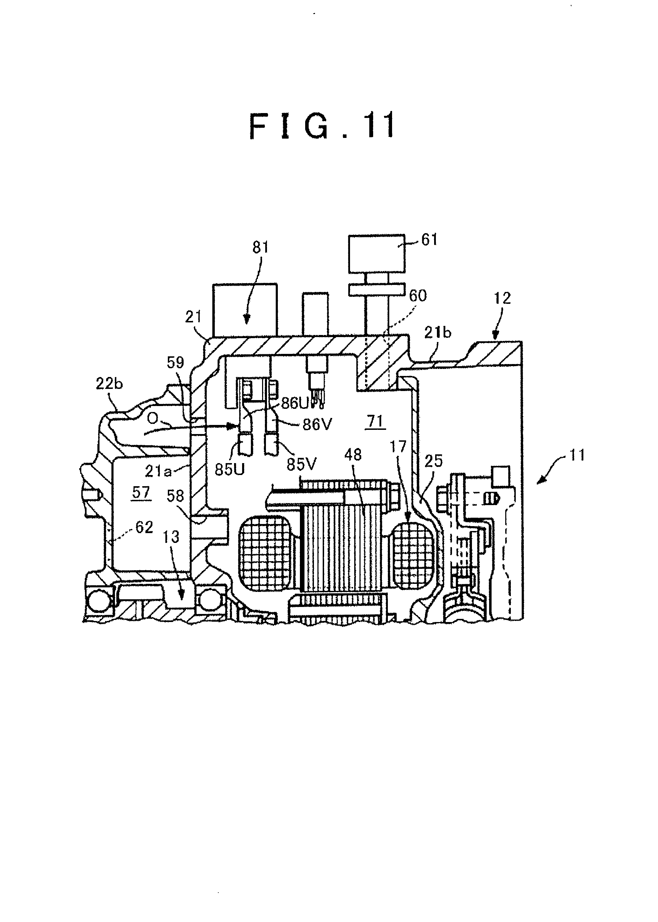

On this account, as illustrated in FIG. 11, when the pressure in the transaxle case 12 increases, oil O discharged from the gear chamber 72 to the motor chamber 71 via the air hole 59 is able to hit the terminal block 81. This accordingly makes it possible to prevent the oil from reaching right under the breather hole 60, and to prevent occurrence of breather blow from the breather hole 60 via the breather plug 61.

Further, as described above, the power transmission device 11 provided in a hybrid vehicle is configured such that the upper portion of the housing 21 of the transaxle case 12 is provided with the terminal block 81 including: the terminals 87U, 87V, 87W that connect the bus cable connector 93 of the bus cable 92 to the terminals 86U, 86V, 86W of the wirings 85U, 85V, 85W of the stator 44 of the motor generator 17 accommodated in the motor chamber 71; and the housing 82 that holds the terminals 87U, 87V, 87W.

The power transmission device 11 of the present embodiment is able to prevent breather blow by using the terminal block 81 existing in the power transmission device 11, thereby making it possible to prevent an increase of the number of components in the power transmission device 11 and to prevent an increase of a manufacturing cost of the power transmission device 11.

Further, the terminal block 81 is provided with the housing 82 having the terminal 89 to which the terminal 88a of the wiring 88 of the resolver accommodated in the motor chamber 71 is connected, and the terminal block 81 doubles as a terminal block of the resolver.

Accordingly, the power transmission device 11 of the present embodiment is also able to prevent breather blow by using the existing terminal block 81 that functions as the terminal block 81 for the resolver, thereby making it possible to prevent an increase of the number of components in the power transmission device 11 and to prevent an increase of a manufacturing cost of the power transmission device 11.

Note that, in a case where a terminal block for the motor generator 17 and a terminal block for the resolver are separate components, either one of the terminal block for the motor generator 17 and the terminal block for the resolver may be provided between the air hole 59 and the breather hole 60 so as to be opposed to the air hole 59.

Further, the signal connector may be a connecter to which a terminal of a wiring of a thermistor or the like is connected as an electrical component, except for the resolver.

Further, in the present embodiment, the terminal block 81 is provided between the air hole 59 and the breather hole 60, but this is not the only option.

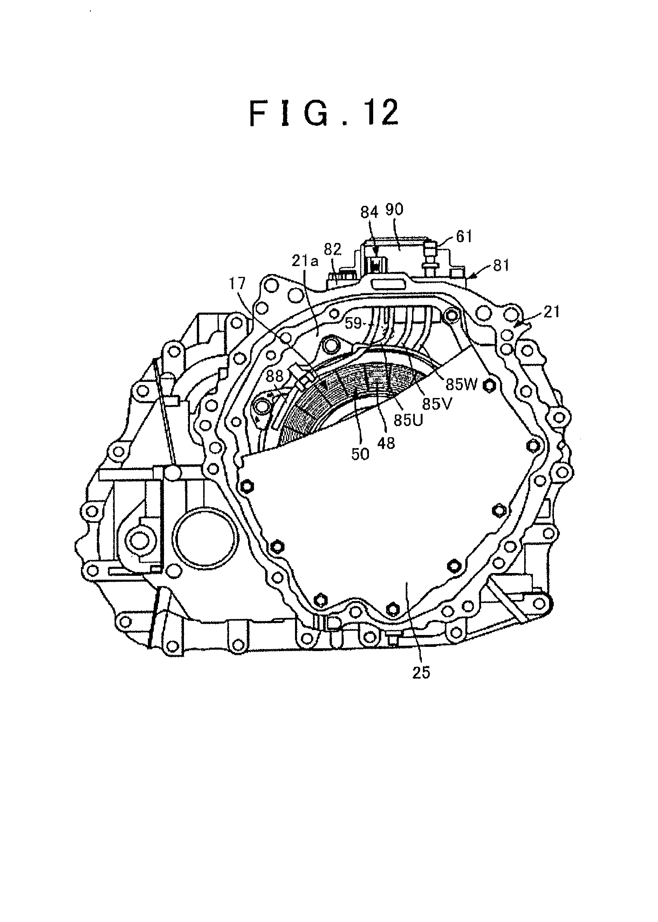

For example, as illustrated in FIG. 12, the wiring 85U connected to the three-phase coil 48 may be provided between the air hole 59 and the breather hole 60 so as to be opposed to the air hole 59.

With such a configuration, it is possible to cause oil just discharged from the air hole 59 to the motor chamber 71 to hit the existing wiring 85U of the power transmission device 11. This makes it possible to more surely prevent the oil from reaching the breather hole 60, and to more surely prevent occurrence of breather blow.

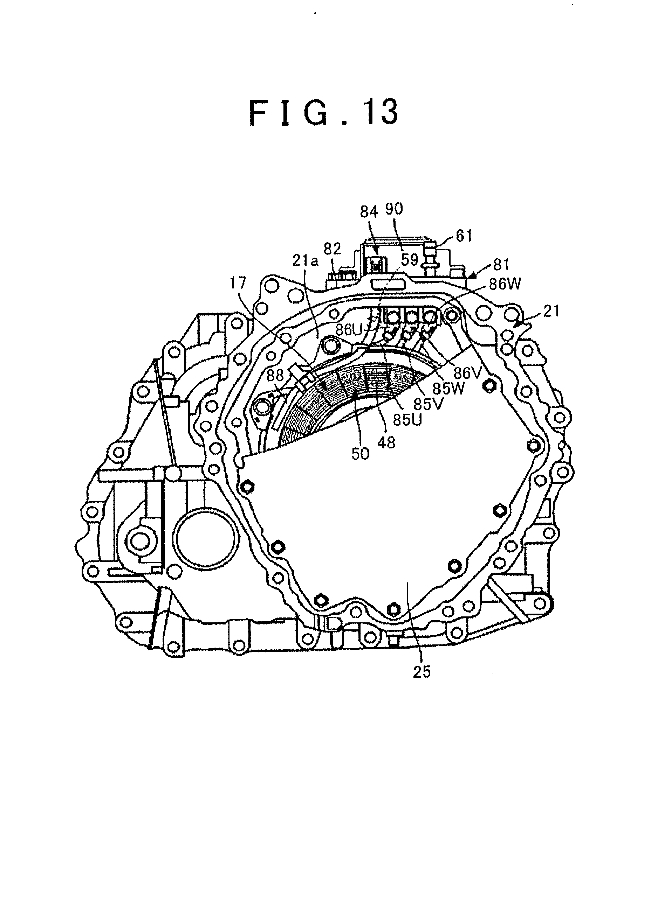

Further, as illustrated in FIG. 13, the wiring 88 of the resolver may be provided between the air hole 59 and the breather hole 60 so that the wiring 88 is opposed to the air hole 59.

With such a configuration, it is possible to cause the oil just discharged from the air hole 59 to the motor chamber 71 to hit the existing wiring 88 of the power transmission device 11. This makes it possible to more surely prevent the oil from reaching the breather hole 60, and to more surely prevent occurrence of breather blow.

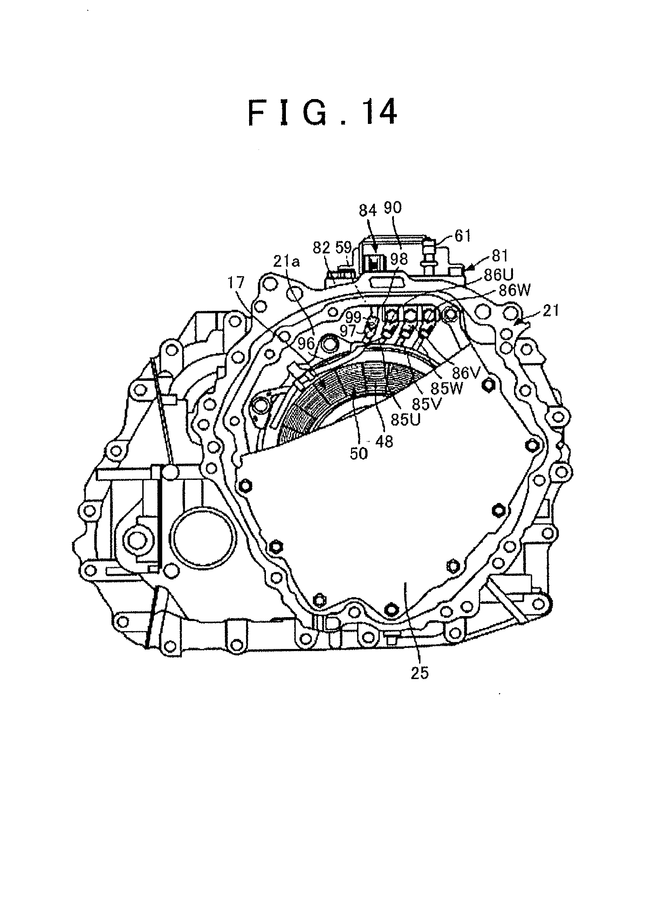

Further, as illustrated in FIG. 14, a member provided between the air hole 59 and the breather hole 60 so to be opposed to the air hole 59 may be a connector 97 of a wiring 96 of an electrical component such as a resolver or a thermistor, and a connector 99 of an external wiring 98 connected to the connector 97.

The important thing is that the oil discharged from the air hole 59 should be caused to hit an existing electric system in the power transmission device 11, so that the oil does not reach right under the breather hole 60.

Further, in the power transmission device 11 of the present embodiment, a prevention function of breather blow from the air hole 59 with the terminal block 81 of the motor generator 17 is described. However, instead of providing the breather hole 60 and the breather plug in the upper portion of the motor chamber 71, a breather hole and a breather plug may be provided in the case 22 above the motor chamber 73, and a terminal block of the driving motor 16 may be provided between the breather hole and the air hole 62 so as to be opposed to the air hole 62.

Even with such a configuration, when the oil in the gear chamber 72 is discharged from the air hole 62 to the motor chamber 73, the oil is caused to hit the terminal block, thereby making it possible to prevent the oil from reaching right under the breather hole, and to prevent occurrence of breather blow.

Further, instead of providing the air hole 62, a breather hole and a breather plug may be provided above the motor chamber 73.

As such, the power transmission device according to the present invention yields such an effect that it is possible to prevent, by use of existing components, breather blow from occurring via an air hole and to prevent an increase of a manufacturing cost of the power transmission device, and is useful as a power transmission device or the like in which a motor chamber where a motor is accommodated communicates, via an air hole, with a gear chamber where a gear is accommodated, and which is provided with a breather that communicates the motor chamber with its outside.

### Description of Reference Numerals

11 power transmission device
12 transaxle case (case)
13 compound planetary gear apparatus (gear)
15 differential apparatus (gear)
17 motor generator (motor)
21a partition portion
30 counter driven gear (gear)
31 final drive gear (gear)
32 counter drive gear (gear)
50 stator
59 air hole
60 breather hole (breather)
61 breather plug (breather)
71 motor chamber
72 gear chamber
81 terminal block
82 housing (hold member)
85U, 85V, 85W wiring (wiring of stator)
86U, 86V, 86W terminal (stator terminal)
87U, 87V, 87W terminal (terminal portion)
88 wiring (wiring of electrical component)
88a terminal
89 terminal (terminal portion)
92 bus cable (external wiring)
95 external wiring
95a terminal (terminal of external wiring)

## Claims

1. A power transmission device comprising:
a case;
a partition portion that sections an inside of the case into a motor chamber in which a motor having a stator is accommodated and a gear chamber in which a gear connected to the motor is accommodated, the partition portion having an air hole that communicates the motor chamber with the gear chamber;
a breather that is disposed on an upper portion of the case and that communicates the motor chamber with an outside of the case; and
a terminal block attached to the upper portion of the case, the power transmission device being **characterized in that**:
the terminal block is attached to the case so as to be placed between the air hole and the breather.

2. The power transmission device according to claim 1, **characterized in that**:
the terminal block is configured to include a terminal portion connected to a terminal of the stator and to a terminal of an external wiring, and a hold member that holds the terminal portion and is attached to the case.

3. The power transmission device according to claim 1, **characterized in that**:
the terminal block is configured to include a terminal portion connected to a terminal of a wiring of an electrical component accommodated in the motor chamber and to a terminal of an external wiring, and a hold member that holds the terminal portion and is attached to the case.

4. The power transmission device according to claim 2 or 3, **characterized in that**:
the terminal block is disposed between the air hole and the breather so as to be opposed to the air hole.

5. The power transmission device according to claim 2, **characterized in that**:
a wiring of the stator which is connected to the terminal portion of the terminal block is disposed between the air hole and the breather so as to be opposed to the air hole.

6. The power transmission device according to claim 3, **characterized in that**:
the wiring of the electrical component which is connected to the terminal portion of the terminal block is disposed between the air hole and the breather so as to be opposed to the air hole.
